# EUROPEAN PATENT SPECIFICATION

(11) **EP 2 762 337 B1**
(45) Date of publication and mention of the grant of the patent: **12.09.2018**
(21) Application number: 11873313.8
(22) Date of filing: 26.09.2011
(51) Int. Cl.: B60H 1/32, B61D 27/00, F25B 1/00, F25B 45/00, B60H 1/00

(54) **VEHICLE AIR-CONDITIONING APPARATUS RENEWING METHOD**
VERFAHREN ZUM ERNEUERN EINER FAHRZEUGKLIMAANLAGE
PROCÉDÉ DE RENOUVELLEMENT D'APPAREIL DE CLIMATISATION DE VÉHICULE

(43) Date of publication of application: 06.08.2014
(73) Proprietor: Mitsubishi Electric Corporation, Tokyo 100-8310 (JP)
(72) Inventor: ISODA, Shoji, Tokyo 100-8310 (JP); TAKATANI, Shiro, Tokyo 100-8310 (JP)
(74) Representative: Sajda, Wolf E.
(86) International application number: PCT/JP2011/005377
(87) International publication number: WO 2013/046245

(56) References cited:
- JP-A- H0 783 545
- JP-A- H0 783 545
- JP-A- H0 861 792
- JP-A- H11 316 057
- JP-A- H11 316 057
- JP-A- 2000 121 134
- JP-A- 2003 042 603
- JP-A- 2006 525 180
- JP-A- 2006 525 180
- US-B1- 6 278 910

## Description

### Technical Field

The present invention relates to a method of updating a vehicle air-conditioning apparatus mounted on a vehicle.

### Background Art

CFC (chlorofluorocarbon) and HCFC (hydrochlorofluorocarbon) have been used as refrigerants for air-conditioning apparatuses (refrigerating and air-conditioning apparatuses). Since chlorine contained in molecules of these refrigerants destroys the stratospheric ozone layer, however, the use of CFC has been totally abolished and the regulation of production of HCFC has been started.

Air-conditioning apparatuses using HFC (hydrofluorocarbon) containing no chlorine in molecules instead of using the above-described refrigerants have been in practical use. In cases where an air-conditioning apparatus using CFC or HCFC is aging, the apparatus has to be updated to an air-conditioning apparatus using HFC because of the total abolition of the use and regulated production of these refrigerants.

Furthermore, an air-conditioning apparatus requires a periodic overhaul including replacement of a compressor for maintenance. At this time, the apparatus has to be updated to an air-conditioning apparatus using HFC.

As an example of such an air-conditioning apparatus, an air-conditioning apparatus in which, instead of conventionally-used R22, an HFC refrigerant, such as R410A, is used as a refrigerant in, for example, a refrigeration cycle, the HFC refrigerant having a higher saturation pressure than R22 at the same temperature (refer to Patent Literature 1, for example) has been proposed.

### Citation List

### Patent Literature

- Patent Literature 1:: Japanese Unexamined Patent Application Publication JP-A-2008-151 386 (paragraph No. [0009])

### Summary of Invention

### Technical Problem

The HFC refrigerants, such as R407C and R410A, offer lower efficiency than HCFC refrigerants and accordingly reduce a cooling or heating capacity. To prevent the reduction, components of an air-conditioning apparatus using the HFC refrigerant may be increased in size to enhance the efficiency of the air-conditioning apparatus and accordingly increase the cooling/heating capacity.

As regards a vehicle air-conditioning apparatus in a frame mounted on a vehicle, however, the apparatus has to be configured so as to be accommodated in the frame even after updated. Specifically, since the updated air-conditioning apparatus is limited by the dimensions of the existing frame, the components of the apparatus cannot be increased in size.

Disadvantageously, if a vehicle air-conditioning apparatus is updated to a vehicle air-conditioning apparatus which uses HFC and whose components are not increased in size, the cooling/heating capacity would be lower than that provided before update.

This is the case, for example in document JP H11 316057 A, which discloses a method of upgrading a vehicle air-conditioning apparatus, wherein the components of the air conditioner are not changed, and control values of the apparatus are updated in response to a change of refrigerant.

Furthermore, when the vehicle air-conditioning apparatus is updated, it is preferred that the time required for design change from the existing vehicle air conditioning apparatus be reduced and the working period for update be shortened.

Furthermore, if some of vehicle air-conditioning apparatuses are updated, the air-conditioning apparatuses to be updated and the updated air-conditioning apparatuses would be arranged. In such a case, to avoid complicated management of facilities, preferably, an inverter for controlling the air-conditioning apparatuses can be used for both the air-conditioning apparatuses to be updated and the updated air-conditioning apparatuses.

The present invention has been made to solve the above-described disadvantages. A first aspect of the invention provides a vehicle air-conditioning apparatus updating method capable of configuring a vehicle air-conditioning apparatus such that the apparatus is accommodated in a frame and a cooling/heating capacity equal to that provided before update can be ensured without increase in the time required for design change, the working period for update, and the size of the vehicle air-conditioning apparatus, and such a vehicle air-conditioning apparatus.

### Solution to the Problem

The invention provides a method of updating a vehicle air-conditioning apparatus such that a first air-conditioning apparatus which is disposed in a frame mounted on a vehicle and in which a first refrigerant is used is updated to a second air-conditioning apparatus using a second refrigerant, the method including the steps of removing at least a first compressor, a first heat source side heat exchanger, first pressure reducing means, and a first use side heat exchanger of the first air-conditioning apparatus from the frame, assembling the second air-conditioning apparatus such that a second compressor, a second heat source side heat exchanger, second pressure reducing means, and a second use side heat exchanger are arranged at predetermined positions in the frame, and charging the second air-conditioning apparatus disposed in the frame with the second refrigerant.

An inverter driving the first compressor included in the first air-conditioning apparatus controls the second compressor on the basis of a measured value of at least one of a pressure sensor and an outside air temperature sensor arranged on a discharge side of the second compressor such that the amount of refrigerant circulating in the second air-conditioning apparatus is larger than that in the first air-conditioning apparatus. Advantageous Effects of Invention

According to the invention, the method includes the steps of removing at least the first compressor, the first heat source side heat exchanger, the first pressure reducing means, and the first use side heat exchanger of the first air-conditioning apparatus from the frame, assembling the second air-conditioning apparatus such that the second compressor, the second heat source side heat exchanger, the second pressure reducing means, and the second use side heat exchanger are arranged at the predetermined positions in the frame, and charging the second air-conditioning apparatus disposed in the frame with the second refrigerant.

The inverter driving the first compressor included in the first air-conditioning apparatus controls the second compressor on the basis of a measured value of at least one of the pressure sensor and the outside air temperature sensor arranged on the discharge side of the second compressor such that the amount of refrigerant circulating in the second air-conditioning apparatus is larger than that in the first air-conditioning apparatus.

Advantageously, the vehicle air-conditioning apparatus is not increased in size and can accordingly be configured to be accommodated in the frame and a cooling/heating capacity equal to that provided before update can be ensured.

### Brief Description of the Drawings

- FIG. 1: is a schematic side view of a vehicle on which a vehicle air-conditioning apparatus according to Embodiment 1 is mounted.
- FIG. 2: is a schematic plan view of the vehicle on which the vehicle air-conditioning apparatus according to Embodiment 1 is mounted.
- FIG. 3: is a cross-sectional view of essential part of the vehicle on which the vehicle air-conditioning apparatus according to Embodiment 1 is mounted.
- FIG. 4: is a plan view illustrating, in outline, the vehicle air-conditioning apparatus according to Embodiment 1.
- FIG. 5: is a cross-sectional view of essential parts of the vehicle air-conditioning apparatus according to Embodiment 1.
- FIG. 6: is a refrigerant circuit diagram of a vehicle air-conditioning apparatus to be updated in Embodiment 1.
- FIG. 7: is a refrigerant circuit diagram of an updated vehicle air-conditioning apparatus in Embodiment 1.
- FIG. 8: is a refrigerant circuit diagram illustrating charging the updated vehicle air-conditioning apparatus with a refrigerant in Embodiment 1.
- FIG. 9: is a graph explaining operation states of the vehicle air-conditioning apparatus according to Embodiment 1 before and after update.
- FIG. 10: is a refrigerant circuit diagram of an updated vehicle air-conditioning apparatus in Embodiment 2.

### Description of Embodiments

Embodiments of the present invention will be described below with reference to the drawings.

Note that the dimensional relationship among components of a vehicle air-conditioning apparatus in the drawings may be different from the actual one.

### Embodiment 1

### Configuration of Vehicle Air-Conditioning Apparatus

The configuration of a vehicle air-conditioning apparatus according to Embodiment 1 to which a vehicle air-conditioning apparatus updating method is applied will be first described.

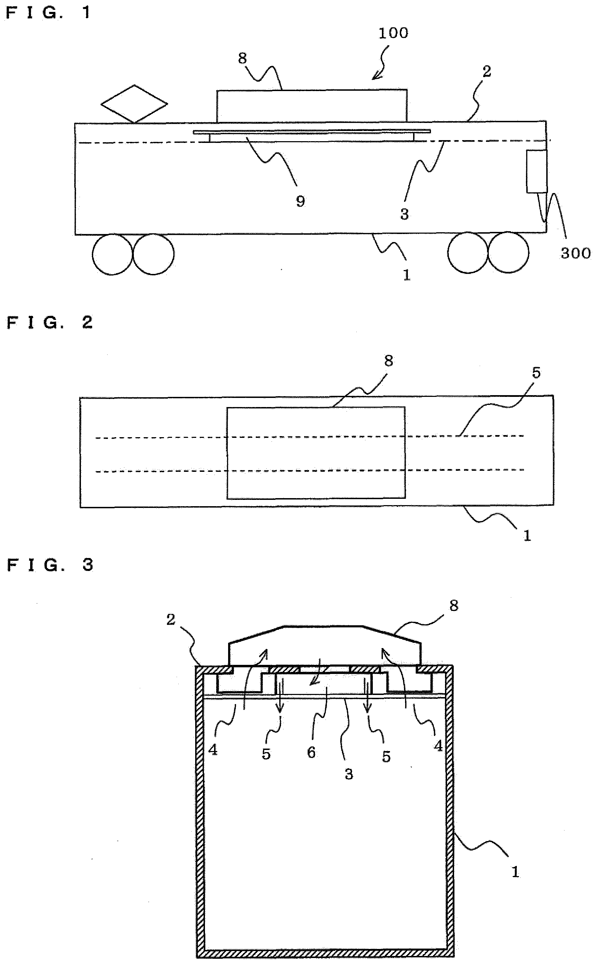

FIG. 1 is a schematic side view of a vehicle on which the vehicle air-conditioning apparatus according to Embodiment 1 is mounted. FIG. 2 is a schematic plan view of the vehicle on which the vehicle air-conditioning apparatus according to Embodiment 1 is mounted. FIG. 3 is a cross-sectional view of essential part of the vehicle on which the vehicle air-conditioning apparatus according to Embodiment 1 is mounted.

Referring to FIGs. 1 to 3, a frame 8 is disposed on a roof 2 of a vehicle 1. The frame 8 accommodates a vehicle air-conditioning apparatus 100. Furthermore, an air inlet 4 and an air outlet 5 are arranged in a ceiling 3 disposed in the vehicle 1 such that the air inlet 4 is close to sides of the ceiling 3 and the air outlet 5 is disposed in central pat thereof. The frame 8 communicates with the inside of the vehicle 1 via the air inlet 4 and the air outlet 5.

The vehicle air-conditioning apparatus sucks air into the vehicle 1 through the air inlet 4 and discharges air-conditioned air through the air outlet 5 to the vehicle 1. In addition, a duct 6 is disposed between the ceiling 3 in the vehicle 1 and a bottom plate of the frame 8. The duct 6 defines a path of air discharged from the vehicle air-conditioning apparatus 100.

Although Embodiment 1 has been described with respect to the case where the frame 8 is disposed on the roof 2 of the vehicle 1, the arrangement is not limited thereto. For example, the frame 8 may be disposed on the bottom of the vehicle 1.

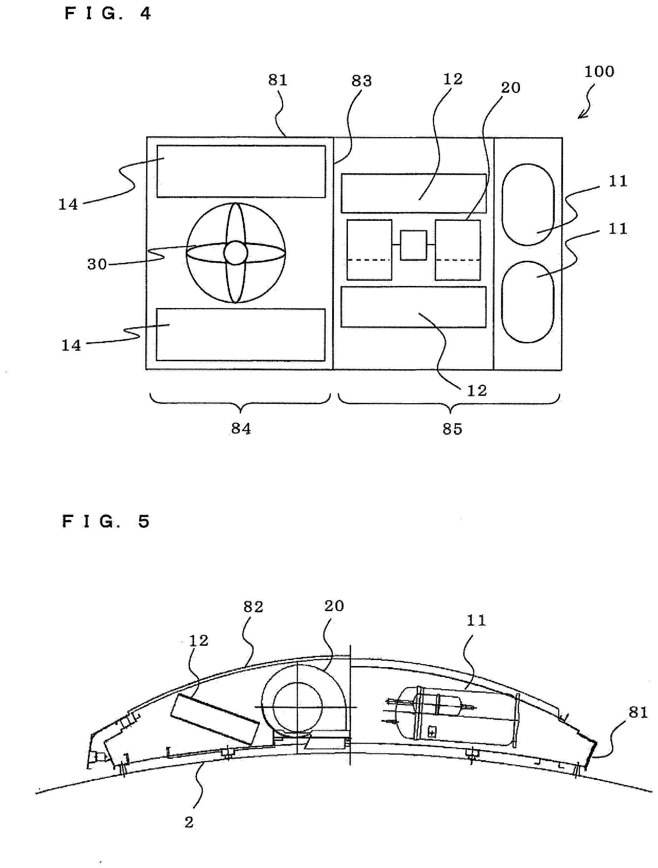

FIG. 4 is a plan view illustrating, in outline, the vehicle air-conditioning apparatus according to Embodiment 1. FIG. 5 is a cross-sectional view of essential parts of the vehicle air-conditioning apparatus according to Embodiment 1. Left half part of FIG. 5 illustrates a cross-section taken at a position where an indoor heat exchanger 12 in FIG. 4 is disposed. Right half part of FIG. 5 is a cross-section taken at a position where a compressor 11 in FIG. 4 is disposed. FIG. 4 illustrates a state in which a top cover 82 is detached.

As illustrated in FIGs. 4 and 5, the frame 8 includes an outer casing composed of side covers 81 and the top cover 82. Furthermore, the frame 8 is divided by a partition 83 into an outdoor unit chamber 84 and an indoor unit chamber 85. The outdoor unit chamber 84 accommodates, for example, outdoor heat exchangers 14 and an outdoor fan 30 which constitute the vehicle air-conditioning apparatus 100.

The indoor unit chamber 85 accommodates, for example, the compressors 11, the indoor heat exchangers 12, and an indoor fan 20 which constitute the vehicle air-conditioning apparatus 100.

Note that the two compressors 11 and the two indoor heat exchangers 12 are arranged in the indoor unit chamber 85, the two outdoor heat exchangers 14 are arranged in the outdoor unit chamber 84, and the indoor fan 20 is shared by the two indoor heat exchangers 12.

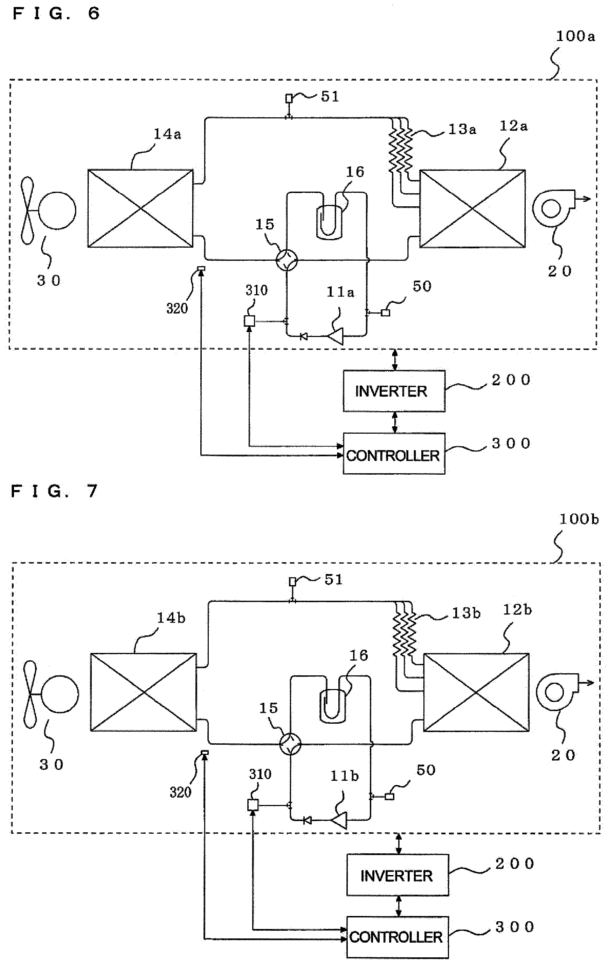

FIG. 6 is a refrigerant circuit diagram of a vehicle air-conditioning apparatus to be updated in Embodiment 1.

In the following description, a subscript "a" is added to a reference numeral of each component of the vehicle air-conditioning apparatus 100 to be updated and a subscript "b" is added to a reference numeral of each component of the updated vehicle air-conditioning apparatus 100 in order to discriminate between the components to be updated and the updated components. Note that any subscript is not added to a reference numeral of each component that is not changed before and after update.

In FIG. 6, a vehicle air-conditioning apparatus 100a includes a compressor 11a, a four-way valve 15, an indoor heat exchanger 12a, pressure reducing means 13a, an outdoor heat exchanger 14a, and an accumulator 16 which are sequentially connected by refrigerant pipes to constitute a refrigerant circuit through which a refrigerant circulates.

The refrigerant circuit of the vehicle air-conditioning apparatus 100a to be updated is charged with an HCFC refrigerant (hereinafter, referred to as an "old refrigerant"), such as R22.

The "vehicle air-conditioning apparatus 100a" in Embodiment 1 corresponds to a "first air-conditioning apparatus" in the invention, the "compressor 11a" corresponds to a "first compressor" in the invention, and the "outdoor heat exchanger 14a" corresponds to a "first heat source side heat exchanger" in the invention.

Furthermore, the "pressure reducing means 13a" in Embodiment 1 corresponds to "first pressure reducing means" in the invention, the "indoor heat exchanger 12a" corresponds to a "first use side heat exchanger" in the invention, and the "old refrigerant" corresponds to a "first refrigerant" in the invention.

The compressor 11a compresses the refrigerant and discharges the resultant refrigerant. This compressor 11a is driven by a motor controlled by an inverter 200. A controller 300 controls a compressor operating frequency of the inverter 200.

The four-way valve 15 is a valve to switch between flow directions of the refrigerant. This four-way valve 15 allows for switching between a cooling operation and a heating operation.

In the cooling operation, the outdoor heat exchanger 14a functions as a refrigerant condenser and the indoor heat exchanger 12a functions as a refrigerant evaporator. In the heating operation, the outdoor heat exchanger 14a functions as a refrigerant evaporator and the indoor heat exchanger 12a functions as a refrigerant condenser.

Although Embodiment 1 has been described with respect to the case where the four-way valve 15 allows for switching between the cooling and heating operations, the invention is not limited to this case. For example, the four-way valve 15 may be eliminated and either the cooling operation or the heating operation may be performed.

The indoor heat exchanger 12a is, for example, a cross-fin type fin-and-tube heat exchanger including a heat transfer tube and many fins. As described above, the indoor heat exchanger 12a functions as a refrigerant evaporator in the cooling operation to cool air within the vehicle and functions as a refrigerant condenser in the heating operation to heat the air within the vehicle.

The indoor fan 20 sucks the air in the vehicle 1 into the indoor unit chamber 85 of the frame 8. Furthermore, the indoor fan 20 supplies air, obtained by heat exchange with the refrigerant through the indoor heat exchanger 12a in the indoor unit chamber 85, to the inside of the vehicle 1.

The pressure reducing means 13 includes one or multiple capillary tubes. The pressure reducing means 13 reduces the pressure of the refrigerant flowing in the refrigerant circuit.

The pressure reducing means 13 is not limited to the capillary tubes. The pressure reducing means 13 may be a variable expansion valve, for example.

The outdoor heat exchanger 14a is, for example, a cross-fin type fin- and-tube heat exchanger including a heat transfer tube and many fins. As described above, the outdoor heat exchanger 14a functions as a refrigerant condenser in the cooling operation and functions as a refrigerant evaporator in the heating operation.

The outdoor fan 30 sucks outside air into the outdoor unit chamber 84 of the frame 8. Furthermore, the outdoor fan 30 discharges air, obtained by heat exchange with the refrigerant through the outdoor heat exchanger 14a in the outdoor unit chamber 84, to the outside of the frame 8.

The accumulator 16 is disposed on a suction side of the compressor 11a and stores liquid refrigerant.

Although Embodiment 1 has been described with respect to the case where the accumulator 16 is disposed, the invention is not limited to this case. The accumulator 16 may be omitted.

The refrigerant pipes constituting the refrigerant circuit are provided with a refrigerant recovery port 50 and a refrigerant introduction port 51 which are used for introducing the refrigerant. For example, the refrigerant recovery port 50 is disposed on the suction side of the compressor 11a and the refrigerant introduction port 51 is disposed in a liquid line between the indoor heat exchanger 12a and the outdoor heat exchanger 14a.

A pressure sensor 310 for measuring the pressure of the refrigerant is disposed on a discharge side of the compressor 11a. Although the configuration in Embodiment 1 includes the pressure sensor 310, the invention is not limited to this configuration. A pressure switch may also be used.

A temperature sensor 320 for measuring the temperature of the outside air for heat exchange through the outdoor heat exchanger 14a is disposed near the outdoor heat exchanger 14a.

The controller 300 controls the operating frequency of the inverter 200 on the basis of a measured value of at least one of the pressure sensor 310 and the temperature sensor 320. Furthermore, the controller 300 controls the indoor fan 20, the outdoor fan 30, and the four-way valve 15 on the basis of, for example, the measured values of the pressure sensor 310 and the temperature sensor 320 and operation setting entered through operation means (not illustrated). The controller 300 includes a microcomputer and operates in accordance with information set previously.

Note that the controller 300 can be implemented as software executed on an arithmetic unit or can be implemented as hardware, such as a circuit device, for implementing the functions of the controller 300. The "controller 300" corresponds to "inverter control means" in the invention.

The configuration of the vehicle air-conditioning apparatus 100a to which the vehicle air-conditioning apparatus updating method is applied in Embodiment 1 has been described.

The method of updating the vehicle air-conditioning apparatus 100a in the frame 8 mounted on the vehicle 1 to a vehicle air-conditioning apparatus 100b using an HFC refrigerant (hereinafter, referred to as a "substitute refrigerant"), such as R407C or R410A, will now be described below.

### Method of Updating Vehicle Air-conditioning Apparatus

The vehicle air-conditioning apparatus updating method includes the steps of (1) removing, (2) assembling, and (3) charging. The steps will be described below.

### (1) Removing

A refrigerant recovery device is connected to the refrigerant introduction port 51 and the refrigerant recovery port 50 of the refrigerant circuit of the vehicle air-conditioning apparatus 100a to recover the refrigerant. After recovery, at least, the compressor 11a, the outdoor heat exchanger 14a, the pressure reducing means 13a, and the indoor heat exchanger 12a of the components of the vehicle air-conditioning apparatus 100a, and the refrigerant pipes connecting these components are removed from the frame 8. Furthermore, wiring of the inverter 200 is disconnected from the compressor 11a.

In addition, the four-way valve 15, the accumulator 16, the indoor fan 20, the outdoor fan 30, and the like which will be used in the updated vehicle air-conditioning apparatus 100b may be removed and cleaned, and parts of the components may be replaced.

The step of removing the vehicle air-conditioning apparatus 100a from the frame 8 is completed.

### (2) Assembling

The configuration of the updated vehicle air-conditioning apparatus 100b will be first described.

FIG. 7 is a refrigerant circuit diagram of the updated vehicle air-conditioning apparatus in Embodiment 1.

In FIG. 7, a compressor 11b is a substitute refrigerant compressor that uses a refrigerating machine oil suitable for the substitute refrigerant (second refrigerant). An indoor heat exchanger 12b and an outdoor heat exchanger 14b are heat exchangers suitable for the substitute refrigerant. Furthermore, pressure reducing means 13b is pressure reducing means suitable for the substitute refrigerant.

Note that the pressure reducing means 13a in the vehicle air-conditioning apparatus 100a does not necessarily have to be updated and may be used in a refrigerant circuit of the vehicle air-conditioning apparatus 100b.

Refrigerant pipes used in the vehicle air-conditioning apparatus 100b are pipes suitable for the substitute refrigerant. In this case, the four-way valve 15, the accumulator 16, the indoor fan 20, and the outdoor fan 30 of the vehicle air-conditioning apparatus 100a are used also in the refrigerant circuit of the vehicle air-conditioning apparatus 100b.

Note that the four-way valve 15 and the accumulator 16 may be omitted.

Furthermore, the inverter 200, the controller 300, the pressure sensor 310, and the temperature sensor 320 in the vehicle air-conditioning apparatus 100a are used also in the refrigerant circuit of the vehicle air-conditioning apparatus 100b.

Although Embodiment 1 has been described with respect to the case where some of the components of the vehicle air-conditioning apparatus 100a are used in the updated vehicle air-conditioning apparatus 100b, the invention is not limited to this case. For example, any other components or all of the components may be updated.

In the above-described configuration, the compressor 11b, the outdoor heat exchanger 14b, and the indoor heat exchanger 12b are equal in size to or smaller than the compressor 11a, the outdoor heat exchanger 14a, and the indoor heat exchanger 12a, respectively. Accordingly, the vehicle air-conditioning apparatus 100b is configured to be accommodated in the frame 8.

The "vehicle air-conditioning apparatus 100b" in Embodiment 1 corresponds to a "second air-conditioning apparatus" in the invention, the "compressor 11b" corresponds to a "second compressor" in the invention, and the "outdoor heat exchanger 14b" corresponds to a "second heat source side heat exchanger" in the invention.

The "pressure reducing means 13b" in Embodiment 1 corresponds to "second pressure reducing means" in the invention, the "indoor heat exchanger 12b" corresponds to a "second use side heat exchanger" in the invention, and the "substitute refrigerant" corresponds to a "second refrigerant" in the invention.

The substeps of the assembling will now be described. Note that the substeps may be performed in any order.

First, the compressor 11b, the four-way valve 15, the indoor heat exchanger 12b, the pressure reducing means 13b, the outdoor heat exchanger 14b, and the accumulator 16 are arranged at respective predetermined positions in the frame 8 and are sequentially connected by the refrigerant pipes. After that, the wiring of the inverter 200 is connected to the compressor 11b. Control of the controller 300 is changed so that the operating frequency of the inverter 200 is higher than that used during control for the compressor 11a to be updated.

For example, the operating frequency of the inverter 200 is changed by 5 % to 10 % higher than that used before update. Increasing the operating frequency as described above causes the amount of refrigerant circulating through the refrigerant circuit of the vehicle air-conditioning apparatus 100b to be larger than that through the refrigerant circuit of the vehicle air-conditioning apparatus 100a.

As regards the change of setting, for example, information of software or the like previously set in the controller 300 is changed to change the control of the controller 300.

The change of setting is not limited to the above-described manner. For example, the setting may be changed by replacing a circuit device or the like constituting the controller 300.

Furthermore, a changeover switch is disposed in either the updated vehicle air-conditioning apparatus 100b or the vehicle 1. When the controller 300 detects the connection of the updated compressor 11b in response to an operation of the changeover switch, the controller 300 controls the inverter 200 to drive the compressor 11b at an operating frequency higher than that for driving the compressor 11a.

Furthermore, when detecting that the changeover switch has not been operated, the controller 300 controls the inverter 200 to drive the compressor 11a at an operating frequency of the compressor 11a used before update at the time of driving. Accordingly, the inverter 200 can be used for each of the vehicle air-conditioning apparatus 100a to be updated and the updated vehicle air-conditioning apparatus 100b. Thus, facilities management associated with the update can be simplified.

Instead of the changeover switch, for example, a short-circuit unit (detecting means) may be provided for a connector for wiring of the compressor 11b to be connected to the inverter 200. In such a case, when the short-circuit unit detects that the compressor 11b is used, the controller 300 controls the inverter 200 to drive the compressor 11b at an operating frequency higher than that for driving the compressor 11a.

Furthermore, when detecting through the short-circuit unit that the second refrigerant is not used, the controller 300 controls the inverter 200 to drive the compressor 11a at the operating frequency of the compressor 11a used before update at the time of driving. In this case, the inverter 200 can be used for each of the vehicle air-conditioning apparatus 100a to be updated and the updated vehicle air-conditioning apparatus 100b as well. Thus, the facilities management associated with the update can be simplified. Information from the short-circuit unit is transmitted through the inverter 200 to the controller 300.

The step of assembling the vehicle air-conditioning apparatus 100b configured to be accommodated in the frame 8 such that the apparatus is disposed in the frame 8 is completed.

Although Embodiment 1 has been described with respect to the case where the same frame 8 mounted on the vehicle 1 is used before and after update, Embodiment 1 is not limited to this arrangement. For example, the frame 8 used before update may be updated to a new frame having substantially the same shape or may be updated to a new frame shaped so as to be compatible with the air inlet 4 and the air outlet 5 (including the duct 6) of the vehicle 1.

### (3) Charging with Refrigerant

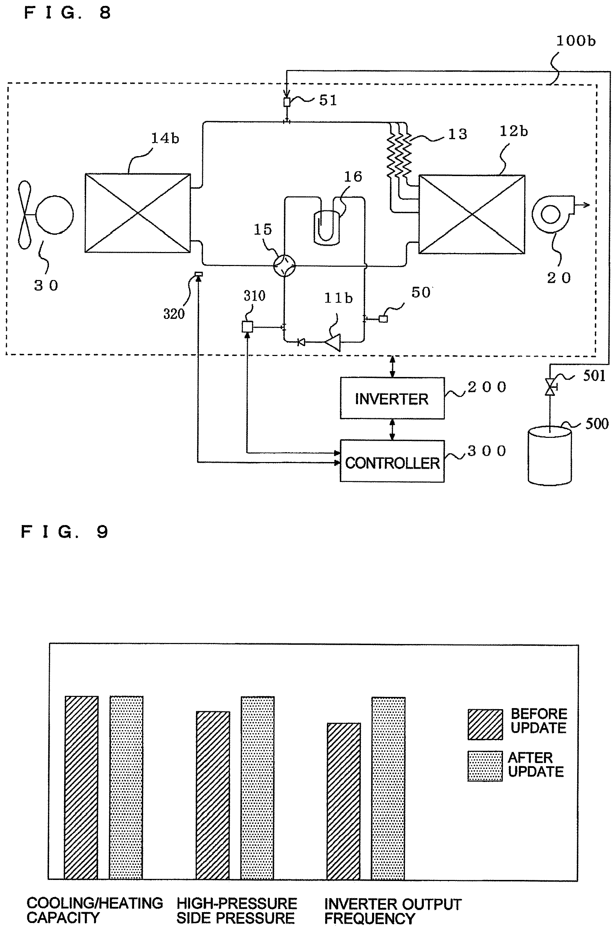

FIG. 8 is a refrigerant circuit diagram explaining the step of charging the updated vehicle air-conditioning apparatus with the refrigerant in Embodiment 1.

First, the refrigerant circuit of the vehicle air-conditioning apparatus 100b is evacuated to remove air and moisture in the refrigerant pipes. Subsequently, the refrigerant introduction port 51 provided for the vehicle air-conditioning apparatus 100b is connected through, for example, a refrigerant recovery/refrigerant introduction hose to a refrigerant feeder 500 for feeding the substitute refrigerant. The refrigerant feeder 500 includes a cylinder provided with an on-off valve 501.

As regards the refrigerant recovery/refrigerant introduction hose used, the connection openings are connectable to both of the refrigerant recovery port 50 and the refrigerant introduction port 51.

Then, the on-off valve 501 of the refrigerant feeder 500 is opened to introduce the substitute refrigerant from the refrigerant feeder 500 into the refrigerant circuit of the vehicle air-conditioning apparatus 100b. At the completion of introduction, the on-off valve 501 is closed to disconnect the refrigerant feeder 500 from the refrigerant introduction port 51.

The step of charging the vehicle air-conditioning apparatus 100b with the substitute refrigerant is completed.

The method of updating the vehicle air-conditioning apparatus according to Embodiment 1 has been described above.

A comparison between operation states before and after update and advantages will now be described.

FIG. 9 is a graph explaining operation states of the vehicle air-conditioning apparatus according to Embodiment 1 before and after update.

As illustrated in FIG. 9, the heating/cooling capacity of the updated vehicle air-conditioning apparatus 100b equal to that provided before update is ensured. As described above, the vehicle air-conditioning apparatus 100b is not increased in size and is accordingly accommodated in the frame 8, and the amount of refrigerant circulating through the refrigerant circuit is increased even in the use of the substitute refrigerant that offers lower efficiency than the old refrigerant. Advantageously, the cooling/heating capacity equal to that provided before update can be ensured.

In addition, since the indoor heat exchanger 12b and the outdoor heat exchanger 14b used are suitable for the substitute refrigerant, heat exchange capacity provided before update can be ensured. Consequently, the cooling/ heating capacity equal to that provided before update can be ensured.

The compressor 11b, the outdoor heat exchanger 14b, and the indoor heat exchanger 12b are substantially equal in size to or smaller than the equivalent components to be updated. Advantageously, the vehicle air-conditioning apparatus 100b can be configured to be accommodated in the frame 8.

For example, as illustrated in FIGs. 4 and 5, if the dimensions of the compressors 11, the indoor heat exchangers 12, and the outdoor heat exchangers 14 are limited in order to accommodate these components in the frame 8, the updated vehicle air-conditioning apparatus 100b can be accommodated in the frame 8.

Additionally, since the compressor 11b is allowed to have substantially the same size as that used before update, the time required for design change from the vehicle air-conditioning apparatus 100a to be updated can be reduced and the working period for update can be shortened.

Since the control of the controller 300 is changed so that the operating frequency of the inverter 200 is higher than that used before update, the amount of refrigerant circulating through the refrigerant circuit can be increased by changing the setting in the controller 300. Thus, the time required for design change from the vehicle air-conditioning apparatus 100a to be updated can be reduced. Additionally, the working period for update can also be shortened.

The setting in the controller 300 is changed by changing control information previously set. Advantageously, it is unnecessary to update hardware of the inverter 200 and the controller 300. Thus, the time required for design change from the vehicle air-conditioning apparatus 100a to be updated can be reduced. Additionally, the working period for update can also be shortened.

Further, the changeover switch is provided for either the updated vehicle air-conditioning apparatus 100b or the vehicle 1, alternatively, the short-circuit unit is provided for the connector or the like of the updated compressor 11b, and the operating frequency of the inverter 200 can be switched to either the operating frequency used before update or the operating frequency higher than that used before update. Therefore, the inverter 200 can be used for each of the vehicle air-conditioning apparatus 100a to be updated and the updated vehicle air-conditioning apparatus 100b. The facilities management associated with the update can be simplified.

In cases where a new vehicle air-conditioning apparatus is installed on the vehicle 1 or where a new vehicle 1 is made, a vehicle air-conditioning apparatus made to specifications of the above-described updated apparatus is provided. Accordingly, the inverter 200 can be used for the vehicle air-conditioning apparatus 100a to be updated. Thus, facilities management associated with making a new vehicle air-conditioning apparatus can be simplified.

### Embodiment 2

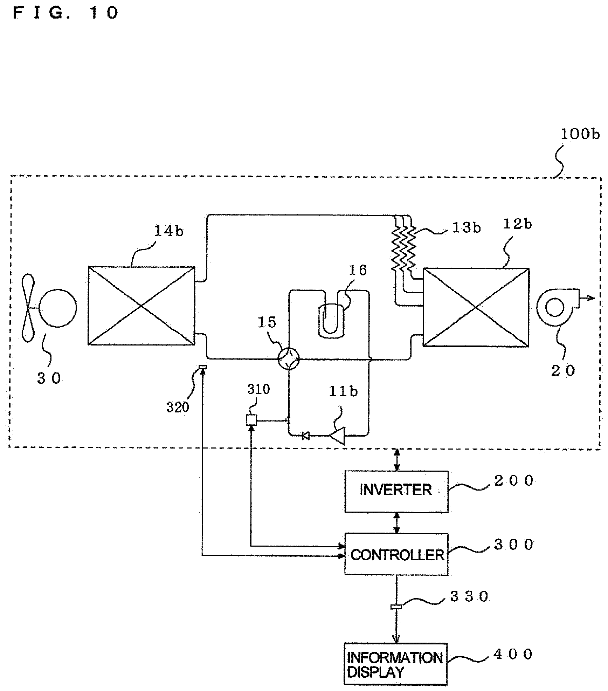

FIG. 10 is a refrigerant circuit diagram of an updated vehicle air-conditioning apparatus in Embodiment 2.

As illustrated in FIG. 10, the controller 300 in Embodiment 2 is provided with an output terminal 330 for outputting information set in the controller 300. Except for the output terminal 330, the configuration is the same as that in Embodiment 1. The same components as those in Embodiment 1 are designated by the same reference numerals.

In the step of (2) assembling in Embodiment 2, the controller 300 configured as described above is disposed in the vehicle 1 or the updated vehicle air-conditioning apparatus 100b. As regards the controller 300, the same controller 300 as that in the vehicle air-conditioning apparatus 100a to be updated may be used. Alternatively, a new controller 300 may be disposed.

In the use of the same controller 300 as that in the vehicle air-conditioning apparatus 100a to be updated, information indicating that the substitute refrigerant is used is added to the information set in the controller 300. In the case where the new controller 300 is disposed, information indicating that the substitute refrigerant is used is previously set.

The other steps are the same as those in Embodiment 1.

Accordingly, during update or upon update, the controller 300 is connected through the output terminal 330 to an external information display 400, so that the updated vehicle air-conditioning apparatus 100b can output the information indicating that the substitute refrigerant is used.

In the vehicle 1 provided with a plurality of vehicle air-conditioning apparatuses 100, therefore, if the vehicle air-conditioning apparatus 100a using the old refrigerant and the vehicle air-conditioning apparatus 100b using the substitute refrigerant are arranged, an operating error can be prevented during update, thus improving operating efficiency.

In the case where a new vehicle air-conditioning apparatus is installed on the vehicle 1 or where a new vehicle 1 is made, since a vehicle air-conditioning apparatus made to specifications of the updated apparatus is provided and the information display 400 to which the vehicle air-conditioning apparatus outputs information about the refrigerant used is provided for the vehicle 1 or the vehicle air-conditioning apparatus, the refrigerant used can be easily identified in the vehicle 1. Advantageously, an operating error can be prevented during maintenance, thus improving the operating efficiency.

### List of Reference Signs

- 1: vehicle
- 2: roof
- 3: ceiling
- 4: air inlet
- 5: air outlet
- 6: duct
- 8: frame
- 11: compressor
- 12: indoor heat exchanger
- 13: pressure reducing means
- 14: outdoor heat exchanger
- 15: four-way valve
- 16: accumulator
- 20: indoor fan
- 30: outdoor fan
- 50: refrigerant recovery port
- 51: refrigerant introduction port
- 81: side cover
- 82: top cover
- 83: partition
- 84: outdoor unit chamber
- 85: indoor unit chamber
- 100: vehicle air-conditioning apparatus
- 200: inverter
- 300: controller
- 310: pressure sensor
- 320: temperature sensor
- 330: output terminal
- 400: information display
- 500: refrigerant feeder
- 501: on-off valve

## Claims

1. A method of updating a vehicle air-conditioning apparatus such that a first air-conditioning apparatus (100a) which is disposed in a frame (8) mounted on a vehicle (1) and in which a first refrigerant is used is updated to a second air-conditioning apparatus (100b) using a second refrigerant and the second air-conditioning apparatus (100b) is disposed in the frame (8),
the method being **characterized by** the following steps:
- removing at least a first compressor (11a), a first heat source side heat exchanger (14a), first pressure reducing means (13a), and a first use side heat exchanger (12a) constituting a refrigerant circuit of the first air-conditioning apparatus (100a) from the frame (8);
- assembling the second air-conditioning apparatus (100b) such that a second compressor (11b), a second heat source side heat exchanger (14b), second pressure reducing means (13b), and a second use side heat exchanger (12b) are arranged at predetermined positions in the frame (8); and
- charging the second air-conditioning apparatus (100b) disposed in the frame (8) with the second refrigerant,
wherein an inverter (200) driving the first compressor (11a) included in the first air-conditioning apparatus (100a) is adapted to control the second compressor (11b) depending on a measured value of at least one of a pressure sensor (310) and an outside air temperature sensor (320) arranged on a discharge side of the second compressor (11b) such that an amount of a refrigerant circulating in the second air-conditioning apparatus (100b) is larger than that in the first air-conditioning apparatus (100a).

2. The method according to claim 1,
wherein the removing step includes a disconnecting step for disconnecting wiring of the inverter (200) driving the first compressor (11a) from the first compressor (11a), and
wherein the assembling step includes:
- a connecting step for connecting the wiring of the inverter (200) to the second compressor (11b); and
- a changing setting step for changing setting to change information about control of inverter control means (300) such that while the second air-conditioning apparatus (100b) operates, the inverter (200) is controlled so as to provide an operating frequency higher than that of the inverter (200) driving the first compressor (11a).

3. The method according to claim 2,
wherein the assembling step includes a disposing step for disposing a changeover switch in either the vehicle (1) or the second air-conditioning apparatus (100b), the changeover switch being configured to allow the inverter control means (300) to select the operating frequency of the inverter (200) which drives either the first compressor (11a) or the second compressor (11b).

4. The method according to claim 2,
wherein the assembling step includes a disposing step for disposing detecting means configured to transmit information to the inverter control means (300), the information indicating that the second compressor (11b) is connected to the inverter (200).

5. The method according to any one of claims 1 to 4,
wherein the assembling step includes a disposing step for disposing information display means (400) for displaying information in either the vehicle (1) or the second air-conditioning apparatus (100b), the information indicating that the refrigerant used is the first refrigerant or the second refrigerant.

## Patentansprüche

1. Verfahren zum Aktualisieren einer Fahrzeugklimaanlage, sodass eine erste Klimaanlage (100A), die in einem an einem Fahrzeug (1) angebrachten Rahmen (8) angeordnet ist und in der ein erstes Kühlmittel verwendet wird, zu einer zweiten Klimaanlage (100B) unter Verwendung eines zweiten Kühlmittels aktualisiert wird und die zweite Klimaanlage (100B) in dem Rahmen (8) angeordnet wird,
**dadurch gekennzeichnet, dass** das Verfahren folgende Schritte aufweist:
- Entfernen mindestens eines ersten Kompressors (11A), eines ersten wärmequellenseitigen Wärmetauschers (14A), einer ersten Druckreduzierungeinrichtung (13A) und eines ersten anwenderseitigen Wärmetauschers (12A), die einen Kühlmittelkreislauf der ersten Klimaanlage (100A) ausbilden, und zwar aus dem Rahmen (8);
- Zusammenbauen der zweiten Klimaanlage (100B) derart, dass ein zweiter Kompressor (11B), ein zweiter wärmequellenseitiger Wärmetauscher (14B), eine zweite Druckreduzierungseinrichtung (13B) und ein zweiter anwenderseitiger Wärmetauscher (12B) an vorbestimmten Positionen in dem Rahmen (8) angeordnet werden;
- Befüllen der im Rahmen (8) angeordneten zweiten Klimaanlage (100B) mit dem zweiten Kühlmittel,
wobei ein Inverter (200), der den ersten Kompressor (11A) antreibt, der in der ersten Klimaanlage (100A) enthalten ist, dazu ausgebildet ist, den zweiten Kompressor (11B) abhängig von einem gemessenen Wert von mindestens einem Sensor von einem Drucksensor (310) und einem Außenlufttemperatursensor (320) zu steuern, die auf einer Entladeseite des zweiten Kompressors (11B) angeordnet sind, und zwar derart, dass die Menge des Kühlmittels, das in der zweiten Klimaanlage (100B) zirkuliert, größer ist als die in der ersten Klimaanlage (100A).

2. Verfahren gemäß Anspruch 1,
wobei der Entfernungsschritt einen Trennungsschritt zum Trennen der Verdrahtung des den ersten Kompressor (11A) antreibenden Inverters (200) von dem ersten Kompressor (11A) aufweist, und
wobei der Zusammenbauschritt folgende Schritte aufweist:
- einen Verbindungsschritt zum Verbinden der Verdrahtung des Inverters (200) mit dem zweiten Kompressor (11B); und
- einen Änderungs-Einstellschritt zum Ändern der Einstellung, um Informationen über die Steuerung von einer Inverter-Steuereinrichtung (300) derart zu ändern, dass während des Betriebs der zweiten Klimaanlage (100B) der Inverter (200) derart gesteuert wird, dass er eine Betriebsfrequenz bereitstellt, die höher ist als die des Inverters (200), der den ersten Kompressor (11A) antreibt.

3. Verfahren gemäß Anspruch 2,
wobei der Zusammenbauschritt einen Anordneschritt zum Anordnen eines Wechselschalters entweder in dem Fahrzeug (1) oder der zweiten Klimaanlage (100B) aufweist, wobei der Wechselschalter derart ausgebildet, dass es der Inverter-Steuereinrichtung (300) ermöglicht wird, die Betriebsfrequenz des Inverters (200) auszuwählen, der entweder den ersten Kompressor (11A) oder den zweiten Kompressor (11B) antreibt.

4. Verfahren gemäß Anspruch 2,
wobei der Zusammenbauschritt einen Anordneschritt zum Anordnen einer Detektions-Einrichtung aufweist, die dazu ausgebildet ist, Informationen an die Inverter-Steuereinrichtung (300) zu übertragen, wobei die Informationen anzeigen, dass der zweite Kompressor (11B) mit dem Inverter (200) verbunden ist.

5. Verfahren gemäß einem der Ansprüche 1 bis 4,
wobei der Zusammenbauschritt einen Anordneschritt zum Anordnen einer Informationsanzeige-Einrichtung (400) aufweist, und zwar zum Anzeigen von Informationen in entweder dem Fahrzeug (1) oder der zweiten Klimaanlage (100B), wobei die Informationen anzeigen, dass das verwendete Kühlmittel das erste Kühlmittel oder das zweite Kühlmittel ist.

## Revendications

1. Procédé pour rénover un appareil de conditionnement d'air de telle façon qu'un premier appareil de conditionnement d'air (100a) qui est disposé dans un cadre (8) monté sur un véhicule (1) et dans lequel un premier réfrigérant est utilisé est rénové vers un second appareil de conditionnement d'air (100b) utilisant un second réfrigérant et le second appareil de conditionnement d'air (100b) est disposé dans le cadre (8), le procédé étant **caractérisé par** les étapes suivantes consistant à :
- enlever au moins un premier compresseur (11a), un premier échangeur côté source de chaleur (14a), un premier moyen de réduction de pression (13a), et un premier échangeur de chaleur côté utilisateur (12a) qui constitue un circuit à réfrigérant du premier appareil de conditionnement d'air (100a) hors du cadre (8) ;
- assembler le second appareil de conditionnement d'air (100b) de telle façon qu'un second compresseur (11b), un second échangeur de chaleur côté source de chaleur (14b), un second moyen de réduction de pression (13b), et un second échangeur de chaleur côté utilisation (12b) sont agencés à des positions prédéterminées dans le cadre (8) ; et
- charger le second appareil de conditionnement d'air (100b) disposé dans le cadre (8) avec le second réfrigérant,
dans lequel un inverseur (200) qui entraîne le premier compresseur (11a) inclus dans le premier appareil de conditionnement d'air (100a) est adapté à commander le second compresseur (11b) en dépendance d'une valeur mesurée d'au moins un capteur parmi un capteur de pression (310) et un capteur de température d'air extérieur (320) agencé sur un côté de décharge du second compresseur (11b) de telle façon qu'une quantité de réfrigérant circulant dans le second appareil de conditionnement d'air (100b) est plus importante que celle dans le premier appareil de conditionnement d'air (100a).

2. Procédé selon la revendication 1,
dans lequel l'étape d'enlèvement inclut une étape de déconnexion pour déconnecter le câblage de l'inverseur (200) qui alimente le premier compresseur (11a) vis-à-vis du premier compresseur (11a), et
dans lequel l'étape d'assemblage inclut :
- une étape de connexion pour connecter le câblage de l'inverseur (200) au second compresseur (11b) ; et
- une étape de changement de réglage pour changer les réglages afin de changer les informations concernant la commande du moyen de commande d'inverseur (300) de telle façon que pendant que le second appareil de conditionnement d'air (100b) fonctionne, l'inverseur (200) est commandé de manière à assurer une fréquence de fonctionnement plus élevée que celle de l'inverseur (200) alimentant le premier compresseur (11a).

3. Procédé selon la revendication 2,
dans lequel l'étape d'assemblage inclut une étape de mise en place pour mettre en place un commutateur inverseur soit dans le véhicule (1) soit dans le second appareil de conditionnement d'air (100b), le commutateur inverseur étant configuré pour permettre au moyen de commande d'inverseur (100) de sélectionner la fréquence de fonctionnement de l'inverseur (200) qui alimente soit le premier compresseur (11a) soit le second compresseur (11b).

4. Procédé selon la revendication 2,
dans lequel l'étape d'assemblage inclut une étape de mise en place pour mettre en place un moyen de détection configuré pour transmettre des informations au moyen de commande d'inverseur (300), les informations indiquant que le second compresseur (11b) est connecté à l'inverseur (200).

5. Procédé selon l'une quelconque des revendications 1 à 4,
dans lequel l'étape d'assemblage inclut une étape de mise en place pour mettre en place un moyen d'affichage d'information (400) pour afficher des informations soit dans le véhicule (1) soit dans le second appareil de conditionnement d'air (100b), les informations indiquant que le réfrigérant utilisé est le premier réfrigérant ou le second réfrigérant.
